# EUROPÄISCHE PATENTANMELDUNG

(11) **EP 3 770 009 A1**
(43) Veröffentlichungstag der Anmeldung: **27.01.2021**
(21) Anmeldenummer: 20182843.1
(22) Anmeldetag: 29.06.2020
(51) Int. Cl.: B60L 53/63, B60L 53/65, B60L 53/66

(54) **VORRAUSSCHAUENDER BETRIEB EINER NACHLADEINFRASTRUKTUR FÜR ELEKTROFAHRZEUGE**

(30) Priorität: 22.07.2019 DE 102019210808
(71) Anmelder: VOLKSWAGEN AG, 38440 Wolfsburg (DE)
(72) Erfinder: OSSADNIK, Thomas Dominik, 38440 Wolfsburg (DE)

(57) **Zusammenfassung**

Die Erfindung betrifft ein Verfahren zum Betreiben einer Nachladeinfrastruktur (10) für Elektrofahrzeuge (14, 16), mit:
- Erhalten wenigstens einer Fahrzeugzustandsgröße von einem Elektrofahrzeug (14, 16), für das ein in der Zukunft liegender möglicher Nachladewunsch ermittelt oder erhalten wurde und das sich in einer Entfernung zu der Nachladeinfrastruktur (10) befindet;
- Ermitteln eines erwarteten Energiebedarfs, der mit der Nachladeinfrastruktur (10) zu decken ist, unter Berücksichtigung der wenigstens einen Fahrzeugzustandsgröße;
- Ermitteln eines Energiebereitstellungspotentials der Nachladeinfrastruktur (10);
Einleiten von wenigstens einer Gegenmaßnahme, wenn ein Vergleich des erwarteten Energiebedarfs und des Energiebereitstellungspotenzials ein Unterdeckungskriterium erfüllt. Ferner betrifft die Erfindung eine Anordnung (1) zum Nachladen von Elektrofahrzeugen (14, 16).

## Beschreibung

Die Erfindung betrifft ein Verfahren zum Betreiben einer Nachladeinfrastruktur für Elektrofahrzeuge und eine Anordnung umfassend eine solche Nachladeinfrastruktur. Bei den Elektrofahrzeugen kann es sich um Kraftfahrzeuge und insbesondere um Personenkraftwagen oder Lastkraftwagen handeln.

Elektrofahrzeuge können bekanntermaßen vollständig, zumindest teilweise und/oder zumindest temporär elektrisch angetrieben werden. Anders ausgedrückt kann elektrische Energie in Traktionsenergie zur Fortbewegung der Elektrofahrzeuge umgewandelt werden. Hierfür umfassen die Elektrofahrzeuge einen elektrischen Energiespeicher, zum Beispiel in Form einer Traktionsbatterie. Dieser Energiespeicher muss regelmäßig mit elektrischer Energie aufgeladen und somit nachgeladen werden, um einen Fahrbetrieb über mehrere Kilometer (zum Beispiel mehrere 100 km) aufrechterhalten zu können.

Hierfür existieren verschiedene Formen von Nachladeinfrastrukturen. Ein Beispiel sind Ladesäulen oder Ansammlungen von Ladesäulen, die sogenannte E-Tankstellen bilden. Im Rahmen dieser Offenbarung kann unter einer Nachladeinfrastruktur eine Infrastruktur verstanden werden, die dazu eingerichtet ist, elektrische Energie an wenigstens ein Elektrofahrzeug zu übertragen, um damit zum Beispiel dessen Traktionsbatterie elektrisch aufzuladen. Analog zu den geschilderten bekannten Varianten kann die Nachladeinfrastruktur auch mehrere Elektrofahrzeuge gleichzeitig mit elektrischer Energie versorgen und hierfür zum Beispiel mehrere Ladesäulen oder allgemeine Ladeanschlüsse umfassen.

Die Nachladeinfrastruktur bezieht ihre elektrische Energie in der Regel primär oder ausschließlich aus einem Stromnetz und insbesondere aus einem öffentlichen Stromnetz. Je nach der Leistungsfähigkeit des Stromnetzes, die zum Beispiel zeitlichen, saisonalen oder verbrauchsabhängigen Schwankungen unterliegen kann, kann die Leistungsfähigkeit der Nachladeinfrastruktur schwanken. Es können also innerhalb einer vorgegebenen Zeitspanne unter Umständen weniger Elektrofahrzeuge geladen oder eine nur geringere Energiemenge je Elektrofahrzeug bereitgestellt werden, als eigentlich gewünscht.

Es sind Lösungen bekannt, derartige Schwankungen über zusätzliche nicht stromnetzgebundene Energiespeicher zumindest teilweise zu kompensieren. Ein Beispiel hierzu findet sich in der EP 2 722 962 A1. Die US 2018/0361868 A1 offenbart eine Lösung zur Koordinierung von Nachladevorgängen mehrerer Fahrzeuge mittels einer Nachladeinfrastruktur, zum Beispiel in Abhängigkeit von deren Leistungsfähigkeit.

Mit den bisher bekannten Lösungen kann nicht immer zufriedenstellend gewährleistet werden, dass die Nachladeinfrastrukturen effizient betrieben werden und insbesondere, dass eine ausreichende Versorgungssicherheit gewährleistet ist.

Unter Versorgungssicherheit kann die Fähigkeit der Nachladeinfrastruktur verstanden werden, dass diese mit einer ausreichend Zuverlässigkeit in der Lage ist, eine gewünschte Anzahl an Elektrofahrzeugen in einer gewünschten Zeit und in einer gewünschten Weise aufzuladen (zum Beispiel mit einer Mindestenergiemenge). Effizient werden Nachladeinfrastruktur zum Beispiel dann betrieben, wenn diese eine hohe Versorgungssicherheit gewährleisten, ohne aber das Stromnetz oder etwaige Energiespeicher unnötig zu belasten.

Eine Aufgabe der vorliegenden Erfindung besteht darin, den Betrieb einer Nachladeinfrastruktur für Elektrofahrzeuge zu verbessern, insbesondere derart, dass eine hohe Versorgungssicherheit bei akzeptabler Effizienz gewährleistet ist.

Diese Aufgabe wird durch ein Verfahren und eine Anordnung mit den Merkmalen der unabhängigen Ansprüche gelöst. Vorteilhafte Weiterbildungen sind in den abhängigen Ansprüchen definiert. Es versteht sich, dass sämtliche der einleitenden Bemerkungen und Merkmale auch auf die vorliegende Lösung zutreffen bzw. bei dieser vorgesehen sein können.

Allgemein wurde erkannt, dass die derzeitigen Lösungen den Betrieb einer Nachladeinfrastruktur primär oder ausschließlich bezogen auf einen aktuellen Zustand optimieren. Die offenbarte Lösung sieht hingegen vor, den Betrieb in vorausschauender Weise zu verbessern und/oder geeignet anzupassen. Insbesondere können Informationen gesammelt werden, die einen erwarteten Energiebedarf abbilden, der von der Nachladeinfrastruktur voraussichtlich gedeckt werden muss, zum Beispiel zu einem vorbestimmten zukünftigen Zeitpunkt. Die Nachladeinfrastruktur kann dann auf diesen erwarteten Energiebedarf vorbereitet werden und/oder es können anderweitige Gegenmaßnahmen rechtzeitig eingeleitet werden, um den erwarteten Energiebedarf und/oder ein Energiebereitstellungspotential der Nachladeinfrastruktur vorausschauend anzupassen. Ersteres kann auch umfassen, dass der Betrieb der Elektrofahrzeuge geeignet angepasst wird, zum Beispiel durch Ausgeben von Anweisungen oder Routenempfehlungen, um das Elektrofahrzeug zu einer anderen Nachladeinfrastruktur zu leiten.

Durch diese Lösung kann die Gefahr reduziert werden, dass Versorgungsengpässe auftreten. Dies gilt insbesondere dann, wenn, wie erfindungsgemäß allgemein bevorzugt, von einer Mehrzahl von Elektrofahrzeugen in einem vorbestimmten Gebiet ausgegangen wird und/oder Informationen zu benachbarten Nachladeinfrastrukturen und insbesondere deren Energiebereitstellungspotential berücksichtigt werden. Dann können zum Beispiel Elektrofahrzeuge geeignet umgeleitet werden (zum Beispiel um eine nicht ausreichend leistungsfähige Nachladeinfrastruktur zu entlasten) und können die Nachladeinfrastrukturen, zu denen die Elektrofahrzeuge geleitet werden, rechtzeitig auf den erwarteten Energiebedarf vorbereitet werden (zum Beispiel durch vorzeitiges Aufladen von lokalen elektrischen Energiespeicher).

Im Detail wird ein Verfahren zum Betreiben einer Nachladeinfrastruktur für Elektrofahrzeuge vorgeschlagen, mit:
- Erhalten wenigstens einer Fahrzeugzustandsgröße, oder mit anderen Worten Fahrzeugbetriebsgröße, von einem Elektrofahrzeug (und bevorzugt wenigstens einer Fahrzeugzustandsgröße von einer Mehrzahl von Elektrofahrzeugen), für das ein in der Zukunft liegender möglicher Nachladewunsch ermittelt oder erhalten wurde und das sich in einer Entfernung zu der Nachladeinfrastruktur befindet (d.h. von dieser derzeit noch nicht nachgeladen wird und/oder hiermit noch nicht verbunden ist);
- Ermitteln eines erwarteten Energiebedarfs, der mit der Nachladeinfrastruktur (insbesondere zukünftig und/oder zu einem definierten zukünftigen Zeitpunkt) zu decken ist, unter Berücksichtigung der wenigstens einen Fahrzeugzustandsgröße;
- Ermitteln eines (insbesondere zukünftigen und/oder zu dem bevorzugt selben zukünftigen Zeitpunkt vorliegenden) Energiebereitstellungspotentials der Nachladeinfrastruktur;
- Einleiten von wenigstens einer (vorbestimmten) Gegenmaßnahme, wenn ein Vergleich des erwarteten Energiebedarfs und des Energiebereitstellungspotenzials ein Unterdeckungskriterium erfüllt.

Die Fahrzeugzustandsgröße kann einen aktuellen Zustand betreffen oder einen erwarteten zukünftigen Zustand, zum Beispiel bezogen auf einer erwarteten Ankunftszeit an der Nachladeinfrastruktur. Allgemein kann die Fahrzeugzustandsgröße einen aktuellen Ort des Elektrofahrzeugs angeben, eine aktuelle oder erwartete Geschwindigkeit (die zum Beispiel während der noch ausstehenden Fahrt zur Nachladeinfrastruktur durchschnittlich oder maximal zu erwarten ist), einen aktuellen oder bei Ankunft erwarteten Ladezustand (State of Charge), eine geplante Fahrroute, eine maximale Batteriekapazität und/oder eine Ladeverhalten des Elektrofahrzeugs (zum Beispiel einen maximal zulässigen Stromfluss und/oder eine allgemeine maximal zulässige Ladegeschwindigkeit während eines Nachladens).

Das Elektrofahrzeug (oder eine hiervon umfasste und/oder damit gekoppelte Kommunikationseinheit, wie zum Beispiel ein Smartphone) kann die Fahrzeugzustandsgröße an eine nachstehend erläuterte Steuereinheit übermitteln, zum Beispiel in Reaktion auf eine entsprechende Anfrage durch die Steuereinheit. Die Übermittlung erfolgt bevorzugt über nichtkabelgebundene Kommunikationswege, wie zum Beispiel per Mobilfunk. Bevorzugt werden zumindest ein Ort des Elektrofahrzeugs und/oder ein Ladezustand des Elektrofahrzeugs als Fahrzeugzustandsgröße erhalten bzw. übermittelt.

Das Ermitteln bzw. das Erhalten des Nachladewunsches kann ein gesonderter erfindungsgemäßer Verfahrensschritt sein und/oder kann eine gesonderte Funktion der nachstehend erläuterten Steuereinheit einer erfindungsgemäßen Anordnung bilden.

Ob ein Nachladewunsch vorliegt, kann übermittelt werden (beispielsweise als eine gesonderte Fahrzeugzustandsgröße), insbesondere wenn der Fahrer einen Ladewunsch durch eine entsprechende Eingabe angibt (zum Beispiel durch eine Eingabe in ein Navigationssystem und insbesondere eine Auswahl der Nachladeinfrastruktur als ein Navigationsziel). Alternativ kann ein etwaiger Nachladewunsch ermittelt werden, zum Beispiel anhand der Fahrzeugzustandsgrößen und insbesondere anhand eines niedrigen Ladestandes. Beispiele hierzu werden nachstehend noch näher erläutert.
Allgemein können Elektrofahrzeuge betrachtet werden, die sich in einem vorbestimmten Umgebungsbereich der Nachladeinfrastruktur befinden und mit dieser noch nicht verbunden sind. Beispielsweise kann ein Umgebungsbereich bis zu 1 km, bis zu 5 km oder bis zu 10 km gewählt sein. Die genaue Festlegung kann in Abhängigkeit einer Dichte von Nachladeinfrastrukturen in einem betrachteten Gebiet getroffen werden, wobei der Umgebungsbereich bevorzugt geringer gewählt wird, wenn höhere Dichten vorliegen.

Von den Elektrofahrzeugen im Umgebungsbereich können bevorzugt automatisch die Fahrzeugzustandsgrößen ermittelt bzw. erhalten werden. Zumindest können diejenigen Elektrofahrzeuge entsprechende Fahrzeugzustandsgrößen übermitteln, bei denen der Fahrer einen Nachladewunsch signalisiert hat und/oder bei denen zum Beispiel ein Ladezustand ein vorbestimmtes Kriterium erfüllt, das einen potentiellen Nachladebedarf anzeigt (zum Beispiel ein Ladezustand unterhalb eines vorbestimmten Schwellenwerts). Zusätzlich oder alternativ können Fahrzeugzustandsgrößen betrachtet werden, die sich auf den Ladezustand zumindest mittelbar auswirken, insbesondere da sie einen Verbrauch von elektrischer Energie betreffen und/oder zumindest anteilig definieren. Hierbei kann es sich zum Beispiel um eine Fahrzeuggeschwindigkeit handeln. Allgemein kann ein erhöhter Verbrauch von elektrischer Energie darauf schließen lassen, dass zeitnahes Nachladen gewünscht sein kann.

Ferner zusätzlich oder alternativ können (bevorzugt ausschließlich) diejenigen Elektrofahrzeuge betrachtet werden, die sich der Nachladeinfrastruktur annähern (zum Beispiel über einen gewissen Zeitraum betrachtet). Hierdurch kann vermieden werden, dass Elektrofahrzeuge berücksichtigt werden, die einen Umgebungsbereich der Nachladeinfrastruktur nur zufällig durchfahren und/oder die Nachladeinfrastruktur nicht anvisieren.

Mittels der geschilderten Möglichkeiten zum bevorzugt automatischen Erhalten von Zustandsgrößen einer Population von Elektrofahrzeugen in der Umgebung der Nachladeinfrastruktur kann abgeschätzt werden, ob, wann und/oder in welchem Ausmaß die Nachladeinfrastruktur voraussichtlich Energie für ein Nachladen bereitstellen muss. Anders ausgedrückt kann also die Nachfrage für eine Versorgung durch die Nachladeinfrastruktur und/oder allgemein der Energiebedarf, der von der Nachladeinfrastruktur voraussichtlich zu decken sein wird, abgeschätzt werden.
Der erwartete Energiebedarf kann also denjenigen Energiebedarf betreffen, der für das Laden des wenigstens einen Elektrofahrzeugs erwartungsgemäß anfällt oder aber der für eine Mehrzahl von Elektrofahrzeugen anfällt, die sich aktuell in einer Umgebung der Nachladeinfrastruktur befinden und für die ein Nachladewunsch ermittelt wurde oder bekannt ist. Anders ausgedrückt kann es sich also um einen kumulierten erwarteten Energiebedarf handeln, der aus einer Mehrzahl erwarteter Energiebedarfe von einzelnen Elektrofahrzeugen bestimmt wird. Wie nachstehend noch erläutert, erfolgt dies bevorzugt zeitbezogen, d. h. der (bevorzugt kumulierte) Energiebedarf wird zeitabhängig vorhergesagt.

Das Energiebereitstellungspotenzial, das bevorzugt ebenfalls zeitabhängig vorhergesagt wird, kann zum Beispiel eine erwartete Ladeleistung der Nachladeinfrastruktur pro Zeiteinheit betreffen und/oder einen maximalen bereitstellbaren Stromfluss und/oder eine maximale Energiemenge. Hierbei kann auch berücksichtigt werden, ob die Nachladeinfrastruktur zum Beispiel zu einem betrachteten zukünftigen Zeitpunkt auch andere Elektrofahrzeuge erwartungsgemäß mit Energie versorgt. Zusätzlich oder alternativ kann in der nachstehend erläuterten Weise berücksichtigt werden, in welchem Ausmaß die Nachladeinfrastruktur auf elektrische Energiequellen zugreifen kann, aus denen Energie für das Nachladen entnommen werden kann. Diese Energiequellen können zum Beispiel elektrische Energiespeicher und/oder regenerative Energiequellen sein.

Allgemein kann das Verfahren zeitbezogen sein und der Energiebedarf und/oder das Energiebereitstellungspotenzial können bezogen auf vorbestimmte zukünftige Zeitpunkte ermittelt werden. Es kann sich also beim Ermitteln der jeweiligen Größen um eine in die Zukunft gerichtete Simulation, Berechnung und/oder Vorhersage handeln, die jedoch bevorzugt anhand aktuell vorliegender Informationen abgeschätzt bzw. vorausgesagt werden.

Zusammengefasst kann also der zu zukünftigen Zeitpunkten erwartete kumuliert anfallende Energiebedarf ermittelt werden, der mit der Nachladeinfrastruktur zu decken ist und der aus einem Nachladewunsch von wenigstens einem Elektrofahrzeug resultiert. Weiter kann das zu den bevorzugt selben zukünftigen Zeitpunkten jeweils vorliegende Energiebereitstellungspotentials der Nachladeinfrastruktur ermittelt bzw. abgeschätzt werden. Eine derartige Abschätzung kann fortlaufend zum Beispiel im Rahmen einer automatischen Überwachung oder Steuerung der Nachladeinfrastruktur oder eines Netzes von Nachladeinfrastrukturen erfolgen, um fortlaufend ein Einleiten von entsprechenden Gegenmaßnahmen zu ermöglichen.

Anders ausgedrückt kann ein zukünftiger zeitlicher Verlauf des erwarteten Energiebedarfs und auch des Energiebereitstellungspotenzials ermittelt bzw. abgeschätzt werden, wobei dies als Verlauf vorzugsweise fortlaufend aktualisiert wird. Allgemein kann die erfindungsgemäße Vorhersage und/oder Abschätzung (bzw. der Vergleich von Energiebedarf und Energiebereitstellungspotenzial) einem aktuellen Zeitpunkt (bevorzugt stets) um einen definierten oder definierbaren Zeitabstand vorauseilen.

Das Unterdeckungskriterium kann zum Beispiel dann erfüllt sein, wenn der Energiebedarf das Energiebereitstellungspotenzial übersteigt oder eine Abweichung des Energiebedarfs von dem Energiebereitstellungspotenzial unterhalb einer akzeptablen Mindestabweichung liegt (z. B. der Energiebedarf zwar unterhalb des Energiebereitstellungspotenzials liegt, aber sich zu nah an diesem befindet und nicht zumindest die akzeptable Mindestabweichung hierzu einhält). Die Abweichung kann insbesondere eine Unterschreitung des Energiebereitstellungspotenzials durch den Energiebedarf betreffen, also inwieweit dieser unterhalb des Energiebereitstellungspotenzials liegt. Liegt dieser deutlich darunter und überschreitet deshalb die akzeptable Mindestabweichung, kann mit einer ausreichenden Sicherheit davon ausgegangen werden, dass das Energiebereitstellungspotenzial auch ohne Gegenmaßnahmen ausreichend sein wird. Ist die Abweichung jedoch vergleichsweise gering, sodass die akzeptable Mindestabweichung unterschritten wird, kann nicht mit einer ausreichenden Sicherheit gewährleistet werden, dass das Energiebereitstellungspotenzial tatsächlich oberhalb des zukünftig real anfallenden Energiebedarfs liegt (d. h. der Energiebedarf liegt dann zu nah an dem Energiebereitstellungspotenzial, sodass eine Überschreitung von Letzterem nicht ausgeschlossen werden kann).

Eine Weiterbildung sieht vor, dass die Gegenmaßnahme umfasst, dass wenigstens ein elektrischer Energiespeicher der Nachladeinfrastruktur aufgeladen wird. Der elektrische Energiespeicher kann ein Akkumulator sein. Es kann sich um einen elektrischen Energiespeicher der Nachladeinfrastruktur handeln, der bevorzugt ortsfest und/oder lokal im Bereich der Nachladeinfrastruktur bzw. als Bestandteil hiervon vorgesehen ist. Der elektrische Energiespeicher kann eine Batterie sein, die z.B. vormals in einem Elektrofahrzeug benutzt wurde und/oder für einen dortigen Einsatz konzipiert ist. Es kann sich also um einen wiederverwendeten beziehungsweise wiederverwerteten Energiespeicher handeln.

Der elektrische Energiespeicher kann aus einem Stromnetz (zum Beispiel einem öffentlichen Stromnetz) mit elektrischer Energie versorgt werden. Der Ladevorgang kann mit einer erfindungsgemäßen Steuereinheit und/oder mittels eines Stromrichters (zum Beispiel der Nachladeinfrastruktur) gesteuert werden. Ein Laden des elektrischen Energiespeichers kann bevorzugt bedarfsweise und insbesondere dann aktiviert, wenn das Unterdeckungskriterium erfüllt ist.

Das Ausmaß (d. h. die Lademenge und/oder Ladegeschwindigkeit) des Ladens des elektrischen Energiespeichers kann in Abhängigkeit einer Abweichung des erwarteten Energiebedarfs und des Energiebereitstellungspotenzials erfolgen (zum Beispiel je größer die Abweichung, desto größer das entsprechende Ausmaß).

Allgemein wird durch diese Weiterbildung eine ausreichende Versorgungssicherheit gewährleistet, da erwartete etwaige Versorgungslücken der Nachladeinfrastruktur mittels des wenigstens einen elektrischen Energiespeichers überbrückt werden können. Durch ein lediglich bedarfsweises Aufladen des elektrischen Energiespeichers wird aber auch die Effizienz verbessert, da bei jedem Aufladevorgang Verluste auftreten und die Lebensdauer bzw. Zuverlässigkeit des elektrischen Energiespeichers durch häufige Ladevorgänge reduziert wird.

Eine Weiterbildung sieht vor, dass die Gegenmaßnahme umfasst, dass die zur Verfügung stehende Energiemenge für ein Nachladen von (zum Beispiel bereits angeschlossenen) Elektrofahrzeugen mittels der Nachladeinfrastruktur zumindest vorübergehend begrenzt wird. Die Begrenzung kann zu einem aktuellen Zeitpunkt angewandt werden, um dann, wenn das wenigstens eine Elektrofahrzeuge die Nachladeinfrastruktur erreicht, noch über ein ausreichendes Energiebereitstellungspotenzial zu verfügen. Ebenso kann aber ein geeigneter Zeitpunkt zur Begrenzung ermittelt werden und zum Beispiel zumindest temporär noch ohne Begrenzung ein Nachladen bereits angeschlossener Fahrzeuge erfolgen.

Das Ausmaß der Begrenzung kann von einer Abweichung des erwarteten Energiebedarfs und des Energiebereitstellungspotenzials abhängen (zum Beispiel je größer die Abweichung, desto niedriger ein Wert auf den begrenzt wird). Die Begrenzung kann zum Beispiel einen maximalen übertragbaren Stromfluss und/oder eine maximal übertragbare Leistung je Elektrofahrzeug definieren.
In einer weiteren Ausführungsform umfasst die Gegenmaßnahme, dass Empfehlungen für alternative Nachlademöglichkeiten für das Elektrofahrzeug ermittelt und/oder ausgegeben werden, zum Beispiel mittels eines Navigationssystems und/oder als eine allgemeine Navigationsanweisung. Eine alternative Nachlademöglichkeiten kann eine weitere Nachladeinfrastruktur sein, die sich bevorzugt innerhalb eines definierten Umgebungsbereichs von der aktuell betrachteten Nachladeinfrastruktur befindet. Wird also festgestellt, dass das Energieberatungspotenzial der betrachteten Nachladeinfrastruktur voraussichtlich nicht ausreicht, kann auf diese Weise versucht werden, das Elektrofahrzeug umzuleiten und zu einer anderen Nachladeinfrastruktur zu navigieren. Dies kann aus Sicht des Fahrers einem Komfortgewinn darstellen und allgemein die Gefahr von Versorgungslücken reduzieren.

Gemäß einer Weiterbildung wird der erwartete Energiebedarf zeitbezogen (oder, mit anderen Worten, zeitabhängig) ermittelt und hierfür wird eine erwartete Ankunftszeit des Elektrofahrzeugs an der Nachladeinfrastruktur ermittelt. Die erwartete Ankunftszeit kann durch eine Extrapolation des aktuellen Fahrverhaltens (zum Beispiel einer aktuellen Fahrgeschwindigkeit) bestimmt werden. Zusätzlich oder alternativ kann die erwartete Ankunftszeit auf Basis von Informationen über eine geplante oder wahrscheinliche Fahrroute des Elektrofahrzeugs zur Nachladeinfrastruktur bestimmt werden, wie sie zum Beispiel von einem Navigationssystem des Elektrofahrzeugs übermittelt werden und/oder anhand von Kartendaten und/oder mittels historischer Daten über bisher bevorzugte Fahrrouten zur Nachladeinfrastruktur bestimmt werden können. Insbesondere können Informationen über Geschwindigkeitsbegrenzungen oder Verkehrsbelastungen verwendet werden, um die Ankunftszeit zu berechnen. Hierdurch kann der erwartete Energiebedarf zeitgenau bestimmt werden. Das Energiebereitstellungspotenzial der Nachladeinfrastruktur kann bevorzugt bezogen auf die erwartete Ankunftszeit ermittelt werden.

Eine Weiterbildung sieht vor, dass wenigstens eine Konfidenzgröße, die zumindest mittelbar den erwarteten Energiebedarf betrifft, ermittelt wird, wobei die Konfidenzgröße, wie nachstehend erläutert, zum Beispiel das Ausmaß dieses Energiebedarfs, dessen Abrufzeitpunkt und/oder die Wahrscheinlichkeit angibt, mit der dieser überhaupt abgerufen werden wird.

Insbesondere kann die Konfidenzgröße eine vermutete Genauigkeit des ermittelten Energiebedarfs und/oder eine vermutete Wahrscheinlichkeit angeben, mit der dieser Energiebedarf tatsächlich auftreten bzw. abgerufen wird. Je genauer, zuverlässiger und/oder konsistenter die Daten sind, die zum Ermitteln des erwarteten Energiebedarfs verwendet wurden, desto größer kann die Konfidenzgröße sein. Auf Basis der Konfidenzgröße kann dann bestimmt werden, mit welcher Dringlichkeit, zu welchem Zeitpunkt und/oder in welchem Ausmaß die wenigstens eine Gegenmaßnahme eingeleitet wird. Sie kann zum Beispiel zusätzlich oder alternativ zu der geschilderten Abweichung von Energiebedarf und Energiebereitstellungspotenzial dazu verwendet werden, um das Ausmaß zu bestimmen, mit dem ein etwaiger elektrischer Energiespeicher geladen werden soll/sollte.

Insbesondere kann die Konfidenzgröße eine Wahrscheinlichkeit angeben, mit der ein Nachladewunsch des Elektrofahrzeugs tatsächlich besteht, d. h. mit welcher Wahrscheinlichkeit ein Energiebedarf tatsächlich durch das Elektrofahrzeug von der Nachladeinfrastruktur angefordert werden wird. Eine solche Konfidenzgröße kann auch als Nachladewahrscheinlichkeit bezeichnet werden.

Zusätzlich oder alternativ kann eine Konfidenzgröße betrachtet werden, die die Wahrscheinlichkeit einer erwarteten Ankunftszeit angibt. Eine solche Konfidenzgröße kann auch als Ankunftszeitwahrscheinlichkeit bezeichnet werden.

Zusätzlich oder alternativ kann eine Konfidenzgröße betrachtet werden, die die Wahrscheinlichkeit angibt, dass der erwartete Energiebedarf insbesondere bei Ankunft einer Nachladeinfrastruktur einem tatsächlichen Energiebedarf des Elektrofahrzeugs entspricht. Eine solche Konfidenzgröße kann auch als Energiebedarfswahrscheinlichkeit bezeichnet werden

Die Konfidenzgröße beziffert auch jeweils eine Unsicherheit (zum Beispiel bei entsprechend niedrigen Werten) bzw. kann dazu verwendet werden, um eine Unsicherheit zu ermitteln. Es können Schwellenwerte definiert werden, welche die wenigstens eine Konfidenzgröße mindestens aufweisen muss, damit z.B. tatsächlich von einem Nachladewunsch des Elektrofahrzeugs ausgegangen wird.

Insbesondere kann die Konfidenzgröße in Abhängigkeit von einer Entfernung des Elektrofahrzeugs zu der Nachladeinfrastruktur ermittelt werden, wobei die Konfidenzgröße steigt (insbesondere wenn diese eine Nachladewahrscheinlichkeit angibt), je weiter sich eine Entfernung des Elektrofahrzeugs von der Nachladeinfrastruktur verringert.

Zusätzlich oder alternativ kann die Konfidenzgröße in Abhängigkeit von einem Ladezustand des Elektrofahrzeugs ermittelt werden. Dies ist insbesondere dann relevant, wenn eine Nachladewahrscheinlichkeit und/oder Energiebedarfswahrscheinlichkeit betrachtet wird. Je geringer der Ladezustand, desto höher kann die Konfidenzgröße bewertet werden, da dann ein Nachladen wahrscheinlicher wird. Hierfür kann auch ein erwarteter Ladezustand bei Ankunft ermittelt bzw. geschätzt werden, zum Beispiel anhand einer noch verbleibenden Distanz zur Nachladeinfrastruktur und/oder eines erwarteten Energieverbrauchs bis zu dieser Ankunft. Insbesondere können Schwellenwerte festgelegt werden, zum Beispiel in der Form, dass ab einem Unterschreiten von dem Schwellenwert (zum Beispiel einem Ladezustand von 10 %) die Nachladewahrscheinlichkeit als besonders hoch bewertet und zum Beispiel mit 100 % beziffert wird.

Ferner zusätzlich oder alternativ kann die Konfidenzgröße anhand einer Eingabe eines Fahrzeugfahrers ermittelt werden. Gibt dieser einen Nachladewunsch direkt an oder wählt die Nachladeinfrastruktur als ein Ziel in zum Beispiel einem Navigationssystem aus, kann die Konfidenzgröße entsprechend hoch gewählt werden, insbesondere wenn diese eine Nachladewahrscheinlichkeit angibt.

Wie erwähnt, kann die Fahrzeugzustandsgröße gemäß einer Variante eine noch zurückzulegenden Fahrroute des Elektrofahrzeugs bis zu der Nachladeinfrastruktur sein oder auf Basis dieser Fahrroute ermittelt werden.

Weiter kann Energiebereitstellungspotential gemäß einer Ausführungsform anhand wenigstens einer der Folgenden ermittelt werden:
- Daten über eine Versorgungsfähigkeit eines Stromnetzes, an das die Nachladeinfrastruktur angeschlossen ist (zum Beispiel je höher, desto höher das Energiebereitstellungspotential);
- eine (zum Beispiel noch verbleibende) Aufladekapazität (oder auch aufladbare Reserve) wenigstens eines elektrischen Energiespeichers der Nachladeinfrastruktur (zum Beispiel je höher, desto höher das Energiebereitstellungspotenzial);
- eine Versorgungsfähigkeit regenerativer Energiequellen, mit denen die Nachladeinfrastruktur verbunden ist (zum Beispiel je höher, desto höher das Energiebereitstellungspotential);

Die Versorgungsfähigkeit des Stromnetzes kann anhand historischer Daten geschätzt werden und/oder in Abhängigkeit von einer Tageszeit oder von saisonalen Bedingungen. Die regenerativen Energiequellen können der Nachladeinfrastruktur zugeordnet und/oder lokal hiermit zusammengefasst sein und zum Beispiel an der Nachladeinfrastruktur angebrachte Solarpaneele betreffen. In Abhängigkeit von Wetterdaten (zum Beispiel betreffend Sonneneinstrahlung oder erwartete Windgeschwindigkeiten), welche beispielsweise online abgefragt werden können, kann dann eine erwartete Leistung dieser regenerativen Energiequellen und somit deren Versorgungsfähigkeit abgeschätzt werden.

Wie geschildert, wird gemäß einer Weiterbildung der mögliche Nachladewunsch anhand einer Änderung (und insbesondere Abnahme) der Entfernung des Elektrofahrzeugs zu der Nachladeinfrastruktur und/oder anhand von Informationen zu einer geplanten Fahrroute des Elektrofahrzeugs ermittelt. Hat die Fahrroute die Nachladeinfrastruktur zum Ziel oder führt daran vorbei, kann daraus auf einen möglichen oder tatsächlichen Nachladewunsch geschlossen werden.

Die Erfindung betrifft ferner eine Anordnung zum Nachladen von Elektrofahrzeugen,
mit einer Nachladeinfrastruktur, die mit wenigstens einem Elektrofahrzeug für ein Übertragen von elektrischer Energie an dieses Elektrofahrzeug verbindbar ist; und
einer Steuereinheit, die dazu eingerichtet ist:
- wenigstens eine Fahrzeugzustandsgröße von einem Elektrofahrzeug zu erhalten, für das ein möglicher in der Zukunft liegender Nachladewunsch ermittelt oder erhalten wurde und das sich in einer Entfernung zu der Nachladeinfrastruktur befindet;
- unter Berücksichtigung der wenigstens einen Fahrzeugzustandsgröße einen erwarteten Energiebedarf zu ermitteln, der mit der Nachladeinfrastruktur zu decken ist;
- ein Energiebereitstellungspotential der Nachladeinfrastruktur zu ermitteln; und
wenigstens eine vorbestimmte Gegenmaßnahme einzuleiten, wenn ein Vergleich des erwarteten Energiebedarfs und des Energiebereitstellungspotenzials ein Unterdeckungskriterium erfüllt (und insbesondere diesen Vergleich auch durchzuführen).

Die Anordnung kann ein Verfahren gemäß jeglicher der hierin geschilderten Varianten ausführen. Allgemein kann die Anordnung jegliche weiteren Merkmale umfassen, um sämtliche der hierin geschilderten Betriebszustände, Funktionen, Wechselwirkungen und Schritte bereitzustellen bzw. auszuführen. Insbesondere können sämtliche geschilderten Weiterbildungen, Erläuterungen und Varianten der Verfahrensmerkmale auch auf die gleichlautenden Anordnungsmerkmale zutreffen bzw. bei diesen vorgesehen sein.

Die Steuereinheit kann eine elektronische und/oder digital betriebene Steuereinheit sein. Sie kann von der Nachladeinfrastruktur umfasst sein und/oder hiermit zumindest kommunizieren. Die Steuereinheit kann eine Prozessoreinrichtung mit zum Beispiel wenigstens einem Mikroprozessor umfassen. Die Steuereinheit kann zusätzlich oder alternativ wenigstens eine Speichereinrichtung zum Speichern von bevorzugt digitalen Informationen umfassen. Auf der Speichereinrichtung können Programmanweisungen hinterlegt sein, die beim Ausführen mittels der Prozesseinrichtung die Anordnung dazu veranlassen, sämtliche vorstehend aufgelisteten Funktionen bereitzustellen und/oder zumindest Teilschritte eines Verfahrens gemäß jeglicher der hierin geschilderten Varianten auszuführen.

Der Begriff Steuereinheit kann dabei derart verstanden werden, dass hiermit der Betrieb der Nachladeinfrastruktur durch etwaiges Einleiten von Gegenmaßnahmen gesteuert wird. Die Steuereinheit kann über Kommunikationsmittel verfügen, zum Beispiel einen Mobilfunkempfänger oder eine Internetverbindung, um die Fahrzeugzustandsgrößen zu erhalten. Der Energiebedarf und/oder das Energiebereitstellungspotential können zum Beispiel per Berechnungen oder Simulationen von der Steuereinheit ermittelt werden. Das Einleiten von Gegenmaßnahmen kann umfassen, dass die Steuereinheit Steuersignale ausgibt, zum Beispiel an ein Navigationssystem eines Elektrofahrzeugs, an einen Stromrichter (zum Beispiel zum Laden elektrischen Energiespeicher) oder aber an eine Einheit, mit der die vorstehend erwähnte Begrenzung einer verfügbaren Energiemenge bewerkstelligt werden kann.

Die Erfindung wird im Folgenden anhand der beigefügten schematischen Figuren erläutert.
- Fig. 1: zeigt eine Anordnung gemäß einem Ausführungsbeispiel der Erfindung, die ein Verfahren gemäß einem Ausführungsbeispiel ausführt.
- Fig. 2-4: zeigen Ablaufschemata zum Erläutern möglicher erfindungsgemäßer Verfahrensabläufe.

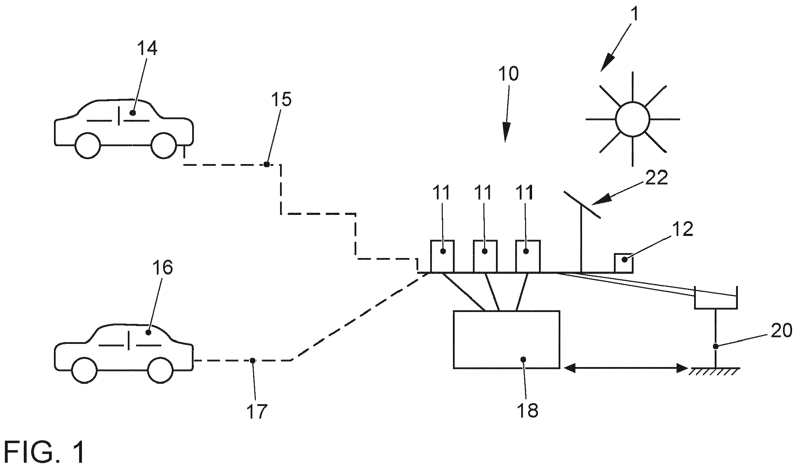

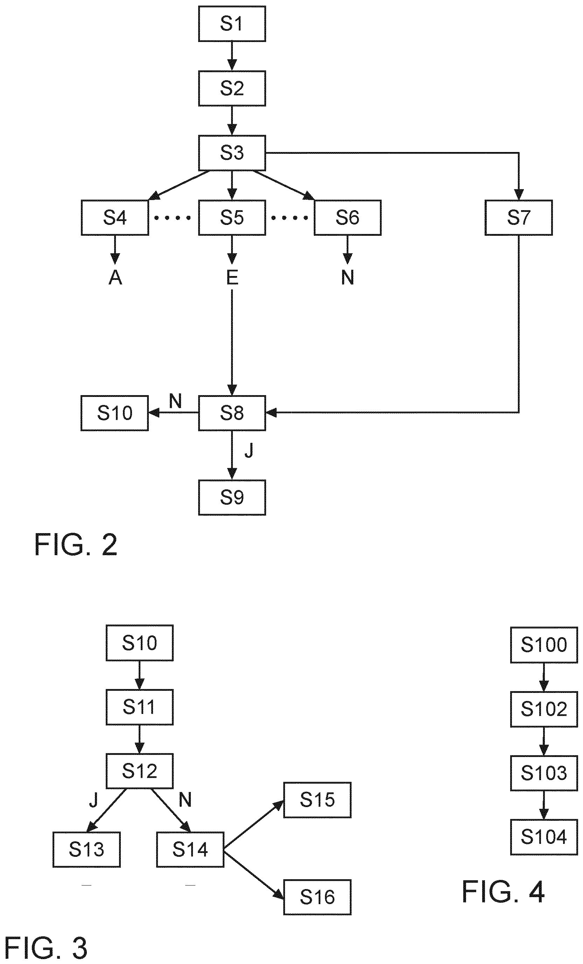

In Figur 1 ist eine Anordnung 1 gemäß einem Ausführungsbeispiel der Erfindung gezeigt, die ein erfindungsgemäßes Verfahren ausführt. Letzteres wird nachstehend anhand der Ablaufschemata der Figuren 2 bis 4 näher erläutert.

Die Anordnung 1 umfasst eine Nachladeinfrastruktur 10, bei der es sich um eine stationäre Gruppe von Ladesäulen 11 handelt. Diese bilden eine E-Tankstelle. Jede Ladesäule 11 kann in an sich bekannter Weise dazu eingerichtet sein, ein Elektrofahrzeug 14, 16 mit Strom zu versorgen.

Die Nachladeinfrastruktur 10 weist ferner eine Steuereinheit 12 auf, die einen Computer mit wenigstens einer Prozessoreinrichtung umfasst. Die Steuereinheit 12 umfasst zudem einen nicht dargestellten Mobilfunkempfänger, um mit nachstehend erläuterten Elektrofahrzeugen 14, 16 zu kommunizieren. Diese Kommunikation kann direkt mit den Elektrofahrzeugen 14, 16 stattfinden oder aber mit einem nicht dargestellten Server, der Informationen von bzw. über die Fahrzeuge 14, 16 an die Steuereinheit 12 weiterleitet und gegebenenfalls auch aufbereitet.

Weiter umfasst die Nachladeinfrastruktur 10 einen lokalen elektrischen Energiespeicher 18. Dieser kann wenigstens eine mehrfach aufladbare Batterie umfassen, zum Beispiel eine wiederverwendete Traktionsbatterie, die vormals in einem Elektrofahrzeug 14, 16 eingesetzt wurde. Der elektrische Energiespeicher 18 wird von einem schematisch angedeuteten öffentlichen Stromnetz 20 gespeist, was selektiv von der Steuereinheit 12 aktiviert werden kann, zum Beispiel durch Aktivieren eines nicht gesondert dargestellten Stromrichters.

Der elektrische Energiespeicher 18 versorgt jede der Ladesäulen 11 bedarfsweise mit Strom. Zusätzlich ist jede der Ladesäulen 11 an das öffentliche Stromnetz 20 angeschlossen und kann von diesem mit elektrischer Energie versorgt werden, um diese Energie an Elektrofahrzeuge 14, 16 im Rahmen einer Nachladung weiterzugeben. Nicht dargestellt in Figur 1 sind die an sich bekannten benötigten elektrischen Komponenten, wie Stromrichter oder Schaltanordnungen, um die Ladesäulen 11 wahlweise mit dem öffentlichen Stromnetz 20, dem elektrischen Energiespeicher 18 nachstehenden regenerativen Energiequellen 22 oder aber gleichzeitig mit mehreren hiervon zu verbinden. Derartige Verbindungen und Energieflüsse können wiederum von der Steuereinheit 12 gesteuert bzw. koordiniert werden.

Die Anordnung 1 umfasst auch eine regenerative Energiequelle 22, bei der es sich lediglich beispielhaft um ein Solarpanel handelt. Dieses kann ebenfalls die Ladesäulen 11 oder aber den elektrischen Energiespeicher 18 mit Strom versorgen.

Ein elektrisches Energiebereitstellungspotenzial der Nachladeinfrastruktur 10 setzt sich somit zumindest aus einer Versorgungsfähigkeit des Stromnetzes 20, einem Ladestand des elektrischen Energiespeichers 18 und einer Versorgungsfähigkeit (bzw. Stromerzeugungsfähigkeit) der regenerativen Energiequelle 22 zusammen. Weiter können auch erwartete Energiebedarfe durch bereits an die Nachladeinfrastruktur 10 angeschlossene Elektrofahrzeuge 14, 16 berücksichtigt werden, also in welchem Ausmaß diese zu einem betrachteten Zeitpunkt voraussichtlich Energie von der Nachladeinfrastruktur 10 beziehen. Je höher dieses Ausmaß, desto geringer das noch verbleibende Energiebereitstellungspotenzial, mit dem noch weitere Elektrofahrzeuge 14, 16 geladen werden könnten.

Im vorliegenden Fall wird das Energiebereitstellungspotenzial allgemein für einen zukünftigen Zeitpunkt geschätzt, bei dem Elektrofahrzeuge 14, 16 die Nachladeinfrastruktur 10 voraussichtlich erreichen, um von dieser elektrischen Energie zu erhalten. Dies wird nachstehend noch näher erläutert.

Die Elektrofahrzeuge 14, 16 befinden sich in dem gezeigten Zustand nicht an der Nachladeinfrastruktur 10, sondern in einer Entfernung hierzu. Allerdings befinden sie sich in einem vorbestimmten Umgebungsbereich um die Nachladeinfrastruktur 10, zum Beispiel in einem Umkreis von 10 km um die Nachladeinfrastruktur 10.
Gezeigt sind für jedes der Elektrofahrzeuge 14, 16 auch geplante (da zum Beispiel im Navigationssystem hinterlegte) oder aber wahrscheinliche Fahrrouten 15, 17 (da zum Beispiel anhand eines Straßenverlaufs und/oder historischer Daten eine entsprechende Wahrscheinlichkeit absehbar ist). Man erkennt, dass eine Fahrroute 15 kurvig ist, was nur eine geringe Durchschnittsgeschwindigkeit erlaubt, wohingegen eine weitere Fahrroute 17 geradlinig ist, was eine höhere Durchschnittsgeschwindigkeit erlaubt. Derartige Informationen über eine geplante oder wahrscheinliche Fahrroute 15, 17 können von der Steuereinheit 12 verwendet werden, um eine erwartete Ankunftszeit der jeweiligen Elektrofahrzeuge 14, 16 zu ermitteln.

Die Anordnung 1 wird durch die Steuereinheit 12 derart gesteuert, dass ein effizienter Betrieb bei einer hohen Versorgungssicherheit gewährleistet ist. Hierfür wird in vorausschauender Weise ein zukünftig erwarteter Energiebedarf geschätzt, aber auch ein zukünftiges Energiebereitstellungspotenzial. Dies wird unter anderem dazu verwendet, um zu ermitteln, ob ein Elektrofahrzeug 14, 16 mit einem etwaigen Nachladewunsch mit ausreichend elektrischer Energie versorgt werden kann, wenn es zum Beispiel zu einer erwarteten Ankunftszeit die Nachladeinfrastruktur 10 erreicht bzw. erreichen würde, oder aber ob dieses umgeleitet werden muss oder anderweitige Gegenmaßnahmen zum Sicherstellen einer ausreichenden Versorgungsfähigkeit bei Ankunft dieses Elektrofahrzeugs 14, 16 ergriffen werden müssen. Dabei führt die Steuereinheit 12 ein erfindungsgemäßes Verfahren aus, was anhand der nachstehend den Figuren 2 bis 4 erläutert wird.

In Figur 2 wird ein Vorgang geschildert, mit dem ermittelt wird, ob als eine Gegenmaßnahme bei einer drohenden Unterdeckung eines erwarteten Energiebedarfs der elektrische Energiespeicher 18 vorausschauend oder, mit anderen Worten, vorbereitend geladen werden soll. Dabei wird beispielhaft lediglich ein Elektrofahrzeug 14, 16 betrachtet. Es versteht sich aber, dass die nachstehenden Schritte auch gleichzeitig bzw. zeitlich überlappend für eine Mehrzahl von Elektrofahrzeugen 14, 16 durchgeführt werden können.

In einem Schritt S1 wird ermittelt, dass sich ein Elektrofahrzeug 14, 16 in dem erwähnten vorbestimmten Umgebungsbereich der Nachladeinfrastruktur 10 befindet. In einem Schritt S2 wird optional überprüft, ob von dem Fahrzeug 14, 16 ein Nachladewunsch erhalten wurde, zum Beispiel durch eine entsprechende Eingabe eines Fahrers. Zusätzlich oder alternativ kann ein möglicher Nachladewunsch ermittelt bzw. abgeschätzt werden. Hierfür kann zum Beispiel betrachtet werden, ob sich das Elektrofahrzeug 14, 16 der Nachladeinfrastruktur 10 annähert oder ob eine geplante oder wahrscheinliche Fahrroute 15, 17 an der Nachladeinfrastruktur 10 vorbeiführt.

Wurde ermittelt bzw. erkannt, dass ein Nachladewunsch (wahrscheinlich) vorliegt (oder auch als eine initiale Maßnahme vor dem Ermitteln eines Nachladewunsches), werden in einem Schritt S3 auch weitere Fahrzeugzustandsgrößen betrachtet. Diese werden zum Beispiel per Mobilfunk von den Elektrofahrzeugen 14, 16 an die Steuereinheit 12 übermittelt. Prinzipiell können die Schritte S1 bis S3 auch in abweichender Reihenfolge oder zumindest teilweise zeitlich überlappend ausgeführt werden.

Anhand der erhaltenen Fahrzeugzustandsgrößen (zum Beispiel in Form einer geplanten Fahrroute 15, 17 und/oder eines aktuellen Orts des Elektrofahrzeugs 14, 16) wird eine erwartete Ankunftszeit in einem Schritt S4 ermittelt, welche die erwartete Ankunftszeit des Elektrofahrzeugs 14, 16 an der Nachladeinfrastruktur 10 angibt. Hierbei kann ein noch verbleibender Verlauf der geplanten oder wahrscheinlichen Fahrroute 15, 17 betrachtet werden, eine erwartete Durchschnittsgeschwindigkeit entlang dieser Fahrroute 15, 17 und/oder können Verkehrsinformationen entlang dieser Fahrroute 15, 17 betrachtet werden, zum Beispiel ob dort Staus zu erwarten sind.

Weiter wird in einem Schritt S5 ein erwarteter Energiebedarf ermittelt, wobei als eine Fahrzeugzustandsgröße ein aktueller Ladezustand eines elektrischen Energiespeichers (zum Beispiel einer Traktionsbatterie) des Elektrofahrzeugs 14, 16 berücksichtigt werden kann. Zusätzlich können Fahrzeugzustandsgrößen berücksichtigt werden, mittels denen ein noch zu erwartender Energieverbrauch (d. h. eine Energieentnahme aus dem elektrischen Energiespeicher des Elektrofahrzeugs 14, 16) bis zur Ankunft an der Nachladeinfrastruktur 10 bestimmt werden kann. Hierdurch kann der Ladezustand des elektrischen Energiespeichers des Elektrofahrzeug 14, 16 bei Ankunft an der Nachladeinfrastruktur 10 prognostiziert werden. Der Verbrauch kann erneut anhand der geplanten oder wahrscheinlichen Fahrroute 15, 17 und/oder eines bisherigen durchschnittlichen Energieverbrauchs ermittelt werden. In diesem Zusammenhang kann auch die im Schritt S4 ermittelte erwartete Ankunftszeit berücksichtigt werden, um den erwarteten Energieverbrauch in Abhängigkeit der noch zurückzulegenden Fahrzeit zu schätzen.

In einem Schritt S6 wird optional eine Nachladewahrscheinlichkeit N berechnet, wobei als Fahrzeugzustandsgrößen der Ladestand eines elektrischen Energiespeichers des Elektrofahrzeugs 14, 16 betrachtet wird und insbesondere der erwartete Ladestand bei Ankunft. Je niedriger der Ladestand, desto höher die Nachfragewahrscheinlichkeit N. Allgemein kann für diese Ermittlung auf in den Schritten S4 und S5 ermittelte Informationen zurückgegriffen werden.

Für jede der Ermittlungen in den Schritten S4 bis S6 werden bevorzugt Konfidenzgrößen ermittelt, die eine vermutete Wahrscheinlichkeit angeben, mit der die Ermittlungsergebnisse dieser Schritte jeweils eintreffen können. Für die im Schritt S4 ermittelte Ankunftszeit wird als Konfidenzgröße eine Ankunftszeitwahrscheinlichkeit A ermittelt. Für den im Schritt S5 ermittelten Energiebedarf wird als Konfidenzgröße E eine Energiebedarfswahrscheinlichkeit E ermittelt. Die im Schritt S6 ermittelte Nachladewahrscheinlichkeit N stellt für sich genommen bereits eine Konfidenzgröße dar.

Die Ermittlungsergebnisse der Schritte S4-S6 samt dazugehöriger etwaiger Konfidenzgrößen A, E, N werden von der Steuereinheit 12 verwendet, um eine nachstehend erläuterten Weise zu überprüfen, ob ein Unterdeckungskriterium erfüllt ist.

Hierfür wird ferner ein Energiebereitstellungspotenzial der Nachladeinfrastruktur ermittelt. Dies erfolgt in einem Schritt S7, der lediglich beispielhaft parallel zu den Schritte S4-S6 durchgeführt wird, aber insbesondere auch danach ausführbare wäre. Es wird bevorzugt, dass der Schritt S7 erst im Anschluss an zumindest Schritt S4 durchgeführt wird, da die in diesem Schritt ermittelte Ankunftszeit dazu verwendet werden kann, das Energiebereitstellungspotenzial zu der entsprechenden Ankunftszeit zu bestimmen und somit besonders genau die Versorgungssicherheit abschätzen zu können.

Mögliche Größen, die bei der Ermittlung des Energiebereitstellungspotenzial berücksichtigt werden, wurden vorstehend bereits genannt. Sie betreffen zum Beispiel die Versorgungsfähigkeit des öffentlichen Stromnetzes 20 aus Figur 1, eine erwarteten beziehungsweise erzielbaren Ladestand der elektrischen Energiespeicher 18 oder aber eine Stromerzeugungsfähigkeit der regenerativen Energiequelle 22.

In einem Schritt S8 wird das Energiebereitstellungspotenzial (bevorzugt bezogen auf die erwartete Ankunftszeit) mit dem erwarteten Energiebedarf (ebenfalls bevorzugt bezogen auf die erwartete Ankunftszeit) verglichen. Wird hierbei ein Unterdeckungskriterium erfüllt, wie es im allgemeinen Beschreibungsteil diskutiert werde, wird gemäß dem Pfeil J zum Schritt S9 gewechselt, um Gegenmaßnahmen einzuleiten. Ist das Unterdeckungskriterium nicht erfüllt, wird gemäß dem Pfeil ein zum Schritt S10 gewechselt und werden keine Gegenmaßnahmen eingeleitet.

Der erwartete Energiebedarf kann im Schritt S8 unter zusätzlicher Berücksichtigung von wenigstens einer der Konfidenzgrößen E (Energiebedarfswahrscheinlichkeit) und N (Nachladewahrscheinlichkeit) betrachtet werden. Beispielsweise kann er hiermit multipliziert werden und somit bei niedrigen Konfidenzgrößen E und N entsprechend abgeschwächt werden.

Die Ankunftszeitwahrscheinlichkeit A kann hingegen dazu verwendet werden, um einen Zeitbereich zu definieren, in dem ein entsprechendes Energiebereitstellungspotenzial bereitgehalten werden muss. Das Unterdeckungskriterium kann daher für den entsprechenden Zeitbereich betrachtet werden, wobei dieser mit abnehmender Ankunftszeitwahrscheinlichkeit A größer ausfallen kann und somit gegebenenfalls über einen längeren Zeitraum etwaige Gegenmaßnahmen aufrechterhalten werden müssen.

Allgemein können das Energiebereitstellungspotenzial und der erwartete Energiebedarf in gleichen Einheiten angegeben werden, zum Beispiel in bereitzustellender bzw. benötigter elektrischer Leistung pro Zeiteinheit und/oder einem bereitzustellenden bzw. benötigten Stromfluss pro Zeiteinheit.

Zu berücksichtigen ist ferner, dass der erwartete Energiebedarf bevorzugt ein kumulierter erwarteter Energiebedarf durch Durchführen von zum Beispiel der Schritte S1 bis S6 für eine Mehrzahl von Elektrofahrzeugen 14, 16 ist. Es kann also ermittelt werden, welcher Energiebedarf anhand einer Population von Elektrofahrzeugen 14, 16, die sich in dem definierten Umgebungsbereich der Nachladeinfrastruktur 10 befinden, zukünftig erwartungsgemäß anfällt.

Dies kann kontinuierlich erfolgen, sodass in vorausschauender Weise und zum Beispiel mit einem gewünschten Zeitabstand von bspw. 15 min oder 30 min in die Zukunft gerichtet fortlaufend der erwartete (bevorzugt kumulierte) Energiebedarf, der von der Nachladeinfrastruktur 10 zu decken sein wird, prognostiziert wird. Gleiches gilt für das Energiebereitstellungspotenzial. Insbesondere kann ein zeitlicher Verlauf des erwarteten Energiebedarfs und des Energiebereitstellungspotenzials ermittelt, genauer gesagt prognostiziert, werden und können Zeitpunkte vorausschauend ermittelt werden, an denen Versorgungslücken auftreten können bzw. an denen das Unterdeckungskriterium erfüllt ist.

In den Figuren 3 bis 5 werden im Folgenden ausgehend von Schritt S9 mögliche eingeleitete Gegenmaßnahmen diskutiert. Erfindungsgemäß kann dabei jede dieser Gegenmaßnahmen, können nur einzelne oder können beliebige Kombinationen hiervon von der Steuereinheit 12 überprüft und eingeleitet werden.

In Figur 3 wird untersucht, ob als Gegenmaßnahme ein vorausschauendes Aufladen des elektrischen Energiespeichers 18 der Nachladeinfrastruktur 10 infrage kommt. In einem Schritt S10 wird das aktuelle Energiebereitstellungspotenzial und/oder der aktuelle Ladestand des elektrischen Energiespeichers 18 betrachtet. Es wird dann im Schritt S11 eine aufladbare Reserve ermittelt, die noch zur Verfügung steht, um elektrische Energie in dem elektrischen Energiespeicher 18 vorzuhalten. In einem Schritt S12 wird ermittelt, ob diese Reserve ausreicht, um das Energiebereitstellungspotenzial zur erwarteten Ankunftszeit eines betrachteten Elektrofahrzeug 14, 16 derart zu erhöhen, dass das Unterdeckungskriterium nicht länger erfüllt ist.

Hierbei kann auch berücksichtigt werden, ob das Energiebereitstellungspotenzial durch andere Quellen erhöht werden kann, zum Beispiel durch eine Erhöhung einer Energieentnahme aus dem öffentlichen Stromnetz 20 oder aber durch eine Erhöhung der Energieversorgung durch die regenerative Energiequelle 22. Folglich kann also eine von dem elektrischen Energiespeicher 18 zur Ankunftszeit bzw. bis zur Ankunftszeit noch zu deckende Lücke im Energiebereitstellungspotenzial ermittelt werden, auch unter Berücksichtigung noch anderer verwendbarer Energiequellen.

Ist die Überprüfung im Schritt S12 positiv (Pfeil J), wird im Schritt S 13 mit dem Aufladen des elektrischen Energiespeichers 18 begonnen. Ist dies nicht der Fall (Pfeil N), wird festgestellt, dass zumindest mittels des elektrischen Energiespeichers 18 eine etwaige Versorgungslücke der Nachladeinfrastruktur 10 zur erwarteten Ankunftszeit nicht gedeckt werden kann. Bevorzugt wird aber auch in diesem Fall der Energiespeicher 18 größtmöglich aufgeladen, um die Versorgungslücke zumindest teilweise zu schließen und ggf. nicht sämtliche Fahrzeuge 14, 16 umleiten zu müssen.

In diesem Fall können weitere Gegenmaßnahmen eingeleitet werden, nämlich im Schritt S15 eine Begrenzung der übertragenen Energiemenge an aktuell geladene Elektrofahrzeuge (nicht gezeigt).

Zusätzlich oder alternativ kann in einem Schritt S16 versucht werden, die Elektrofahrzeuge 14, 16 umzuleiten, für die ein Nachladewunsch bekannt ist oder als wahrscheinlich ermittelt wurde. Insbesondere kann eine Auswahl getroffen werden, welche aus einer etwaigen Mehrzahl von Elektrofahrzeugen 14, 16 umgeleitet werden sollen und welche nicht.

Hierfür kann für jedes Elektrofahrzeug 14, 16 eine erwartete Ankunftszeit, ein voraussichtlicher Energiebedarf bei Ankunft an der Nachladeinfrastruktur 10 und/oder eine geplante oder wahrscheinliche Fahrroute 15, 17 des Elektrofahrzeugs 14, 16 überprüft werden. Liegt die Ankunftszeit eines Elektrofahrzeugs 14, 16 unterhalb von einem Schwellenwert (zum Beispiel unterhalb von 15 Minuten oder 30 Minuten), kann von einem Umleiten dieses Fahrzeugs 14, 16 abgesehen werden, da dieses die Nachladeinfrastruktur bereits nahezu erreicht hat.

Liegt der erwartete Energiebedarf eines Elektrofahrzeugs 14, 16 oberhalb von einem Schwellenwert (zum Beispiel 80 % von dessen Ladekapazität), kann ebenfalls von einem Umleiten abgesehen werden, da dieser erhöhte Energiebedarf eine Betriebssicherheit des Elektrofahrzeugs 14, 16 gefährdet. Ein Laden von Elektrofahrzeugen 14, 16 mit derart erschöpfter Batteriekapazität kann also priorisiert werden.

Liegen entlang der geplanten oder wahrscheinlichen Fahrroute 15, 17 eines Elektrofahrzeugs 14, 16 noch weitere Nachladeinfrastrukturen 10, an denen ein Nachladen rechtzeitig möglich ist, können die Elektrofahrzeuge 14, 16 zu diesen Nachladeinfrastrukturen 10 umgeleitet werden. In diesem Fall können auch Anreize geschaffen werden, um den Fahrer zu diesen weiteren Nachladeinfrastruktur 10 zu leiten. Beispielsweise können Bonussysteme eingesetzt werden oder kann der Preis je Kilowattstunde an diesen weiteren Nachladeinfrastruktur 10 kurzfristig für dieses spezifische Elektrofahrzeug 14, 16 reduziert werden.

In Figur 4 ist ein Vorgang gezeigt, der im Rahmen von Schritt S16 zum Umleiten eines Elektrofahrzeugs 14, 16 durchgeführt werden kann. Dieser Vorgang ist Bestandteil eines erfindungsgemäßen Verfahrens und kann von der Steuereinheit 12 zumindest mittelbar veranlasst werden. Er kann dann mittels eines Fahrerinformationssystems und/oder eines Navigationssystems des Elektrofahrzeugs 14, 16 durchgeführt werden.

In einem Schritt S100 wird einem Elektrofahrzeug 14, 16, das für ein Umleiten infrage kommt, von der Steuereinheit 12 übermittelt, dass dieses einen Fahrer zum Umleiten bzw. Anfahren einer anderen Nachladeinfrastruktur 10 animieren soll. Dem Fahrer können dann auf einer Anzeigeeinrichtung im Fahrzeug (zum Beispiel dem Bildschirm eines Fahrerinformationssystems) und unter Steuerung durch ein Navigationssystem Kartenausschnitte angezeigt werden, in denen die Nachladeinfrastruktur 10 geeignet markiert ist. Beispielsweise kann die aktuelle Nachladeinfrastruktur 10, deren Energiebereitstellungspotenzial zur erwarteten Ankunftszeit nicht ausreichen wird, als nicht ansteuerbar markiert werden (zum Beispiel mit einem X). Weitere verfügbare Nachladeinfrastrukturen 10 können hingegen als unproblematisch markiert werden, zum Beispiel durch grünes Einfärben. Nachladeinfrastrukturen 10, mit denen ein Unterdeckungskriterium nur marginal erfüllt oder auch marginal nicht erfüllt ist, können als kritisch eingestuft und entsprechend markiert werden (zum Beispiel durch rotes Einfärben).

Der Fahrer kann aktiv aufgefordert werden, sein Einverständnis zum Anfahren einer der anderen verfügbaren Nachladeinfrastrukturen 10 zu erklären und die bevorzugte Nachladeinfrastruktur 10 auszuwählen (zum Beispiel durch eine Touch-Eingabe im Schritt S102). Der Steuereinheit der ursprünglichen betrachteten Nachladeinfrastruktur 10 kann daraufhin in Schritt S103 mitgeteilt werden, dass das entsprechende Elektrofahrzeug 14, 16 keinen Nachladewunsch mehr an dieser Nachladeinfrastruktur 10 besitzt.

Stattdessen kann einer Steuereinheit der ausgewählten weiteren Nachladeinfrastruktur 10 in Schritt S104 der Nachladewunsch mitgeteilt wobei, wobei z.B. die Nachladewahrscheinlichkeit N bezogen auf diese weiteren Nachladeinfrastruktur 10 auf 100 % gesetzt werden kann.

### Bezugszeichenliste

- 1: Anordnung
- 10: Nachladeinfrastruktur
- 11: Ladesäule
- 12: Steuereinheit
- 14, 16: Elektrofahrzeug
- 15, 17: Fahrroute
- 18: elektrischer Energiespeicher
- 20: Stromnetz
- 22: regenerative Energiequelle
- A: Ankunftszeitwahrscheinlichkeit (Konfidenzgröße)
- E: Energiebedarfswahrscheinlichkeit (Konfidenzgröße)
- N: Nachladewahrscheinlichkeit (Konfidenzgröße)

## Patentansprüche

1. Verfahren zum Betreiben einer Nachladeinfrastruktur (10) für Elektrofahrzeuge (14, 16), mit:
- Erhalten wenigstens einer Fahrzeugzustandsgröße von einem Elektrofahrzeug (14, 16), für das ein in der Zukunft liegender möglicher Nachladewunsch ermittelt oder erhalten wurde und das sich in einer Entfernung zu der Nachladeinfrastruktur (10) befindet;
- Ermitteln eines erwarteten Energiebedarfs, der mit der Nachladeinfrastruktur (10) zu decken ist, unter Berücksichtigung der wenigstens einen Fahrzeugzustandsgröße;
- Ermitteln eines Energiebereitstellungspotentials der Nachladeinfrastruktur (10);
- Einleiten von wenigstens einer Gegenmaßnahme, wenn ein Vergleich des erwarteten Energiebedarfs und des Energiebereitstellungspotenzials ein Unterdeckungskriterium erfüllt.

2. Verfahren nach Anspruch 1,
**dadurch gekennzeichnet, dass** die Gegenmaßnahme umfasst, dass wenigstens ein elektrischer Energiespeicher (18) der Nachladeinfrastruktur (10) aufgeladen wird.

3. Verfahren nach einem der vorangehenden Ansprüche,
**dadurch gekennzeichnet, dass** die Gegenmaßnahme umfasst, dass die zur Verfügung stehende Energiemenge für ein Nachladen von Elektrofahrzeugen (14, 16) mittels der Nachladeinfrastruktur (10) zumindest vorübergehend begrenzt wird.

4. Verfahren nach einem der vorangehenden Ansprüche,
**dadurch gekennzeichnet, dass** die Gegenmaßnahme umfasst, dass Empfehlungen für alternative Nachlademöglichkeiten für das Elektrofahrzeug (14, 16) ermittelt werden.

5. Verfahren nach einem der vorangehenden Ansprüche,
**dadurch gekennzeichnet, dass** der erwartete Energiebedarf zeitbezogen ermittelt wird und hierfür eine erwartete Ankunftszeit des Elektrofahrzeugs (14, 16) an der Nachladeinfrastruktur (10) ermittelt wird.

6. Verfahren nach einem der vorangehenden Ansprüche,
**dadurch gekennzeichnet, dass** wenigstens eine Konfidenzgröße (A, N, E) betreffend den erwarteten Energiebedarf in Abhängigkeit von einer Entfernung des Elektrofahrzeugs (14, 16) zu der Nachladeinfrastruktur (10) und/oder von einem Ladezustand des Elektrofahrzeugs (14, 16) und/oder anhand einer Eingabe eines Fahrzeugfahrers ermittelt wird.

7. Verfahren nach einem der vorangehenden Ansprüche,
**dadurch gekennzeichnet, dass** die Fahrzeugzustandsgröße eine noch zurückzulegende Fahrroute (15, 17) des Elektrofahrzeugs (14, 16) bis zu der Nachladeinfrastruktur (10) ist oder auf Basis dieser Fahrroute (15, 17) ermittelt wird.

8. Verfahren nach einem der vorangehenden Ansprüche,
**dadurch gekennzeichnet, dass** das Energiebereitstellungspotential anhand wenigstens einer der Folgenden ermittelt wird:
- Daten über eine Versorgungsfähigkeit eines Stromnetzes (20), an das die Nachladeinfrastruktur (10) angeschlossen ist;
- eine Aufladekapazität von wenigstens einem elektrischen Energiespeicher (18) der Nachladeinfrastruktur (10);
- einer Versorgungsfähigkeit regenerativer Energiequellen (22), mit denen die Nachladeinfrastruktur (10) verbunden ist.

9. Verfahren nach einem der vorangehenden Ansprüche,
**dadurch gekennzeichnet, dass** der mögliche Nachladewunsch anhand einer Änderung der Entfernung des Elektrofahrzeugs (14, 16) zu der Nachladeinfrastruktur (10) und/oder anhand von Informationen zu einer geplanten Fahrroute (15, 17) des Elektrofahrzeugs (14, 16) ermittelt wird.

10. Anordnung (1) zum Nachladen von Elektrofahrzeugen (14, 16),
mit einer Nachladeinfrastruktur (10), die mit wenigstens einem Elektrofahrzeug (14, 16) für ein Übertragen von elektrischer Energie an dieses Elektrofahrzeug (14, 16) verbindbar ist; und mit einer Steuereinheit (12), die dazu eingerichtet ist:
- wenigstens eine Fahrzeugzustandsgröße von einem Elektrofahrzeug (14, 16) zu erhalten, für das ein möglicher in der Zukunft liegender Nachladewunsch ermittelt oder erhalten wurde und das sich in einer Entfernung zu der Nachladeinfrastruktur (10) befindet;
- unter Berücksichtigung der wenigstens einen Fahrzeugzustandsgröße einen erwarteten Energiebedarf zu ermitteln, der mit der Nachladeinfrastruktur (10) zu decken ist;
- ein Energiebereitstellungspotential der Nachladeinfrastruktur (10) zu ermitteln; und
- wenigstens eine Gegenmaßnahme einzuleiten, wenn ein Vergleich des erwarteten Energiebedarfs und des Energiebereitstellungspotenzials ein Unterdeckungskriterium erfüllt.
